# FASCICULE DE BREVET EUROPEEN

(11) **EP 1 707 843 B1**
(45) Date de publication et mention de la délivrance du brevet: **22.07.2015**
(21) Numéro de dépôt: 06111741.2
(22) Date de dépôt: 27.03.2006
(51) Int. Cl.: F16F 15/139, F16F 15/131

(54) **Double volant amortisseur pour véhicule automobile**
Zweimassenschwungrad für ein Kraftfahrzeug
Double mass flywheel for vehicle

(30) Priorité: 29.03.2005 FR 0550796
(43) Date de publication de la demande: 04.10.2006
(73) Titulaire: Valeo Embrayages, 80000 Amiens Cedex 1 (FR)
(72) Inventeur: Bonfilio, Ciriaco, 92110, Clichy (FR)
(74) Mandataire: Tran, Chi-Hai

(56) Documents cités:
- WO-A-2004/053354
- FR-A- 2 823 547
- GB-A- 2 325 969
- US-A- 5 503 595
- US-A- 5 526 714
- US-A- 5 759 105
- US-A1- 2004 211 640

## Description

L'invention concerne un double volant amortisseur pour véhicule automobile, comprenant deux volants d'inertie primaire et secondaire co-axiaux, dont l'un est supporté et centré sur l'autre par un palier, et un amortisseur de torsion à ressorts et moyens de frottement, qui est monté entre les volants et les relie en rotation pour la transmission d'un couple tout en absorbant et en amortissant les vibrations et les à-coups de rotation.

Le palier précité de support et de centrage est en général un palier lisse ou un palier à roulement monté sur un appendice axial d'un des volants, à l'intérieur d'un alésage central de l'autre volant, ce palier pouvant avoir un diamètre relativement faible par rapport au diamètre externe des volants et une dimension axiale également réduite.

Il en résulte un risque de basculement d'un volant par rapport à l'autre, notamment en raison des charges axiales relativement importantes qui peuvent s'exercer sur les volants en fonctionnement, par exemple du fait de l'actionnement d'un embrayage associé au volant secondaire, ce basculement ayant pour conséquence un risque de frottement entre les volants à leur périphérie externe et de destruction des composants qui sont associés aux volants ou logés entre les volants dans cette zone.

Ce risque pourrait être supprimé si l'on augmentait suffisamment la distance axiale entre les volants, mais cela serait considéré comme un inconvénient important par les constructeurs automobiles qui souhaitent au contraire réduire l'encombrement axial des doubles volants amortisseurs.

Les documents US-A-5,526,714 et GB-A-2325969 décrivent des doubles volants amortisseurs dont les amortisseurs de torsion comprennent des rondelles de friction formées à leur périphérie avec des pattes de plus grande épaisseur axiale, ces pattes servant d'appui circonférentiel à des moyens d'entraînement en rotation et ne s'opposant pas au basculement d'un volant d'inertie vers l'autre volant.

US 5 503 595 divulgue un double volant amortisseur comprenant un ensemble de rondelles de friction qui est serré axialement entre les parties périphériques radialement internes du volant primaire et du volant secondaire.

L'invention a notamment pour but d'apporter une solution simple, efficace et économique à ce problème.

Elle a pour objet un double volant amortisseur pour véhicule automobile, qui peut être équipé d'un palier de dimensions réduites tout en étant protégé contre les risques de détérioration et de destruction résultant du fait d'un basculement d'un des volants par rapport à l'autre.

Elle propose à cet effet un double volant amortisseur, en particulier pour véhicule automobile, comprenant deux volants d'inertie primaire et secondaire co-axiaux, un palier de support et de centrage du volant secondaire sur le volant primaire, et un amortisseur de torsion, monté entre les deux volants et les reliant en rotation pour la transmission d'un couple, et comprenant une rondelle de frottement appliquée sur l'un des volants ou sur un élément solidaire de l'un des volants et entraînée en rotation par l'autre des volants ou par un élément solidaire de l'autre des volants, caractérisé en ce que la périphérie radialement externe de ladite rondelle comporte une partie cylindrique en saillie axiale s'étendant du côté du volant qui entraîne la rondelle en rotation, présentant une face radiale d'application sur ce volant et constituant une butée axiale s'étendant entre les deux volants et s'opposant au basculement d'un des volants vers l'autre volant. L'invention ajoute donc une fonction supplémentaire à une rondelle de frottement, en l'utilisant comme butée axiale pour annuler ou limiter le basculement d'un des volants vers l'autre volant, notamment dans le cas où le palier de support et de centrage du volant secondaire sur le volant primaire est un palier de faibles dimensions.

Pour bien s'opposer au basculements, la partie cylindrique de la rondelle s'étend radialement à une faible distance axiale du volant qui l'entraîne en rotation, de façon à s'appliquer sur ce volant dès le début du basculement d'un des volants vers l'autre volant.

Ce basculement applique la rondelle sur le volant qui l'entraîne en rotation et ne créé donc pas de frottement entre la rondelle et ce volant.

En variante, on peut prévoir qu'en l'absence de basculement d'un volant vers l'autre, cette partie de la rondelle soit déjà au contact du volant qui l'entraîne en rotation.

La distance radiale entre cette partie cylindrique en saillie de la rondelle et l'axe de rotation des volants permet de limiter le basculement maximum d'un volant par rapport à l'autre à un angle très faible.

La partie cylindrique en saillie de la rondelle qui forme la butée axiale s'opposant à un basculement relatif des volants peut également servir à l'entraînement en rotation de la rondelle par l'un des volants.

Pour cela, cette partie cylindrique en saillie peut comporter des moyens venant en prise avec des moyens complémentaires du volant d'entraînement en rotation de la rondelle, ces moyens étant par exemple des encoches de la partie cylindrique de la rondelle et des éléments en saillie du volant.

Ces encoches peuvent avoir une étendue circonférentielle supérieure à celle des éléments en saillie prévus sur le volant d'entraînement, de telle sorte que la rondelle n'est entraînée en rotation par ce volant qu'après un débattement angulaire prédéterminé entre les volants, égal à la différence d'étendue circonférentielle des encoches et des éléments en saillie.

Lorsque l'amortisseur de torsion du double volant amortisseur selon l'invention comprend des ressorts circonférentiels qui sont logés dans une chambre annulaire prévue sur l'un des volants et qui s'appuient à leurs extrémités sur un voile annulaire solidaire de l'autre volant, la rondelle de frottement précitée s'étend entre le premier volant et le voile annulaire et peut s'appliquer sur ce voile pour s'opposer au basculement précité entre les volants.

De façon générale, l'invention permet d'annuler ou au moins de limiter le basculement d'un volant par rapport à l'autre, sans augmenter la distance axiale entre les volants et donc l'encombrement axial du double volant amortisseur et sans utiliser de pièces ou de composants supplémentaires.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'un double volant amortisseur selon l'invention ;
- la figure 2 est une vue schématique partielle en coupe transversale illustrant les moyens d'entraînement en rotation de la rondelle de frottement par le volant secondaire ;
- la figure 3 est une vue schématique partielle en coupe axiale illustrant une variante de réalisation de l'invention.

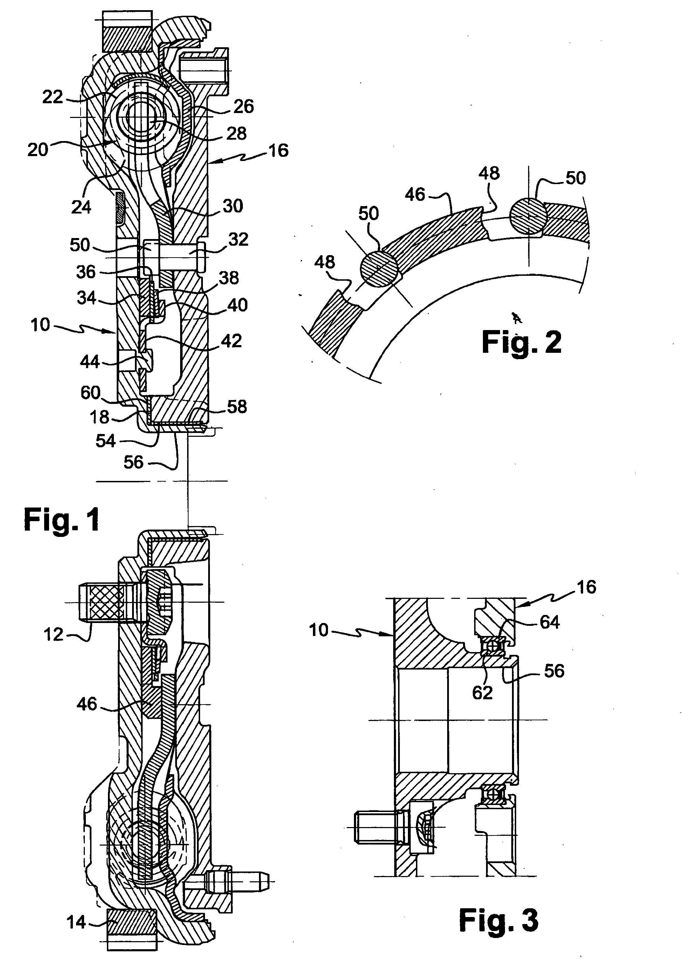

Le double volant amortisseur de la figure 1 comprend un volant primaire 10, destiné à être fixé en bout d'un vilebrequin d'un moteur à combustion interne par des vis 12 et portant à sa périphérie externe une couronne dentée 14 de démarreur, et un volant secondaire 16 qui est centré et supporté sur le volant primaire 10 au moyen d'un palier 18 qui est ici un palier lisse, le volant secondaire 16 étant associé à un embrayage non représenté et relié par cet embrayage à une transmission.

Un amortisseur de torsion 20 est monté entre les deux volants d'inertie 10 et 16 et les relie en rotation pour la transmission d'un couple d'un volant à l'autre et pour l'absorption et l'amortissement des vibrations et des à-coups de rotation, dus notamment aux acyclismes du moteur à combustion interne.

Dans cet exemple de réalisation, l'amortisseur de torsion comprend des ressorts hélicoïdaux 22 à disposition circonférentielle qui sont logés dans une chambre annulaire 24 aménagée au voisinage de la périphérie externe du volant primaire, entre celui-ci et un couvercle annulaire 26 fixé à ce volant primaire.

Les ressorts 22 s'appuient à leurs extrémités d'une part sur des bossages du volant primaire 10 et du couvercle annulaire 26 et d'autre part sur des pattes 28 d'un voile annulaire 30 fixé sur le volant secondaire 16 par des rivets 32.

L'amortisseur de torsion 20 comprend encore des moyens de frottement, qui sont destinés à amortir les débattements angulaires entre les volants d'inertie et qui comprennent une rondelle de frottement 34 s'étendant entre les deux volants et appliquée sur une face radiale du volant primaire 10 par un ensemble comprenant une rondelle d'application 36 sollicitée axialement par un ressort annulaire 38 prenant appui sur un rebord annulaire 40 d'un couvercle 42 qui est fixé sur le volant primaire 10 par des rivets emboutis 44 ainsi que par les vis 12 de fixation du volant primaire sur le vilebrequin du moteur.

Ces moyens de frottement se trouvent radialement à l'intérieur des rivets 32 de fixation du voile annulaire 30 du volant secondaire 16.

La rondelle d'application 36 est solidaire en rotation, par exemple par une denture interne, du couvercle annulaire 42 et est ainsi entraînée en rotation par le volant primaire 10. La rondelle de frottement 34 comporte à sa périphérie externe un rebord cylindrique 46 qui se trouve radialement au niveau des rivets 32 précités et qui s'étend axialement en direction du voile annulaire 30 et s'applique sur celui-ci ou en reste séparé par une distance axiale très faible.

Des encoches ou échancrures 48 sont formées à intervalles réguliers dans ce rebord cylindrique 46 et reçoivent les têtes 50 des rivets 32 qui s'étendent axialement avec un jeu circonférentiel déterminé dans les encoches 48.

Comme représenté en figure 2, les bords radiaux de ces encoches peuvent comprendre des parties concaves complémentaires des surfaces cylindriques des têtes 50 des rivets 32.

En fonctionnement, les faibles débattements angulaires entre les volants d'inertie sont absorbés par les ressorts 22 de l'amortisseur de torsion avec un amortissement très faible, tant qu'ils restent inférieurs au jeu circonférentiel des têtes 50 des rivets 32 dans les encoches ou échancrures 48 du rebord 46 de la rondelle de frottement 34.

Lorsque le débattement angulaire entre les volants devient supérieur à ce jeu circonférentiel, la rondelle de frottement 34 est entraînée en rotation par les têtes 50 des rivets 32 et le débattement angulaire est amorti par frottement de la rondelle 34 entre le volant primaire 10 et la rondelle d'application 36 solidaire en rotation de ce volant.

Les basculements d'un volant d'inertie par rapport à l'autre et qui tendraient à rapprocher axialement ces votants l'un de l'autre à leur périphérie externe, sont empêchés ou limités par appui axial du rebord cylindrique 46 de la rondelle de frottement 34 sur le voile annulaire 30 solidaire du volant secondaire 16. Cela permet notamment de limiter à une valeur faible le jeu axial entre le volant secondaire 16 et le couvercle annulaire 26 de l'amortisseur de torsion 20, sans risque de contact et de frottement entre eux.

Lorsque le débattement angulaire entre les volants est inférieur au jeu circonférentiel des têtes 50 des rivets dans les encoches 48 précitées et qu'il se produit un début de basculement entre les volants, l'appui du rebord cylindrique 46 sur le voile annulaire 30 provoque un frottement qui est limité, du fait que la rondelle 34 est en général en matière plastique, et qui vient s'ajouter au frottement de la partie radialement interne du couvercle annulaire 26 de l'amortisseur de torsion sur une rondelle d'étanchéité, qui ferme sensiblement la chambre annulaire 24 contenant les ressorts 22 et qui est portée par le volant secondaire 16.

Ce frottement entre le rebord 46 de la rondelle 34 et le voile annulaire 30 cesse dès que le débattement angulaire entre les volants devient supérieur au jeu circonférentiel précité, la rondelle 34 étant alors entraînée en rotation par les têtes 50 des rivets et ne frottant plus sur le voile annulaire 30.

Dans le mode de réalisation de la figure 1, le palier 18 est un palier lisse formé d'une bague cylindrique 54 qui est montée sur un appendice axial 56 du volant primaire à l'intérieur d'un alésage central 58 du volant secondaire, et d'une rondelle 60 qui s'étend radialement à une extrémité de la bague 54 et qui est interposée entre une face radiale du volant primaire 10 et une face radiale correspondante du volant secondaire 16.

Dans la variante de réalisation de la figure 3, le palier de centrage et de support du volant secondaire 16 sur le volant primaire 10 est un palier à roulement de dimensions relativement très faibles, dont la bague interne 62 est emmanchée sur l'appendice axial 56 du volant primaire et dont la bague externe 64 est emmanchée dans l'alésage axial du volant secondaire 16. L'invention permet de réduire ou d'annuler les risques de basculement d'un volant par rapport à l'autre, en dépit des dimensions axiales et radiales faibles du palier à roulement, qui accentuent ce risque de basculement.

L'invention est bien entendu applicable aux doubles volants amortisseurs dont l'amortisseur de torsion est d'un type différent de celui qui a été décrit et représenté dans les dessins et est par exemple du type à ressorts radiaux en position de repos. La partie 46 de la rondelle de frottement 34 qui forme la butée axiale s'opposant au basculement d'un volant vers l'autre peut être appliquée directement sur le volant secondaire ou sur un élément solidaire de ce volant secondaire et autre que le voile annulaire 30 précité.

Il est également possible que la rondelle de frottement 34 soit appliquée en contact de frottement sur une face radiale du volant secondaire et soit entraînée en rotation par le volant primaire, à l'inverse de ce qui a été décrit ci-dessus et représenté en figure 1.

Dans tous les cas, l'invention permet de réduire ou d'empêcher les basculements d'un volant par rapport à l'autre, sans augmenter ou même en diminuant légèrement l'encombrement axial du double volant amortisseur et sans utiliser de pièces ou de composants supplémentaires.

## Revendications

1. Double volant amortisseur, en particulier pour véhicule automobile, comprenant deux volants d'inertie primaire (10) et secondaire (16) coaxiaux, un palier (18) de support et de centrage du volant secondaire sur le volant primaire, et un amortisseur de torsion (20) monté entre les deux volants et les reliant en rotation pour la transmission d'un couple et comprenant une rondelle de frottement (34) appliquée sur l'un des volants ou sur un élément solidaire de l'un des volants et entraînée en rotation par l'autre des volants ou par un élément solidaire de l'autre des volants, **caractérisé en ce que** la périphérie radialement externe de ladite rondelle (34) comporte une partie cylindrique (46) en saillie axiale s'étendant du côté du volant qui entraîne la rondelle en rotation, présentant une face radiale d'application sur ce volant, et constituant une butée axiale s'opposant au basculement d'un des volants par rapport à l'autre.

2. Double volant amortisseur selon la revendication 1, **caractérisé en ce que** la partie cylindrique (46) de la rondelle (34) s'étend radialement à une faible distance axiale du volant (16) ou de l'élément (30) qui l'entraîne en rotation et s'applique sur ce volant (16) ou sur cet élément (30) en cas de basculement d'un des volants vers l'autre volant.

3. Double volant amortisseur selon l'une des revendications 1 à 2, **caractérisé en ce que** la partie cylindrique (46) de la rondelle comprend des moyens venant circonférentiellement en prise avec des moyens complémentaires (50) du volant d'entraînement en rotation de la rondelle.

4. Double volant amortisseur selon la revendication 3, **caractérisé en ce que** lesdits éléments (50) en saillie axiale sont engagés avec un jeu circonférentiel dans des encoches (48) de la partie cylindrique (46) de la rondelle (34).

5. Double volant amortisseur selon l'une des revendications précédentes, **caractérisé en ce que** la rondelle est en matière plastique.

6. Double volant amortisseur selon l'une des revendications précédentes, **caractérisé en ce que** le palier (18) de support et de centrage est un palier lisse ou un palier à roulement, de dimensions relativement faibles.

7. Double volant amortisseur selon l'une des revendications précédentes, **caractérisé en ce que** l'amortisseur de torsion comprend des ressorts (22) disposés circonférentiellement dans une chambre annulaire (24) formée à la périphérie externe d'un des volants et appliqués à leurs extrémités sur un voile annulaire (30) solidaire de l'autre volant, ce voile annulaire s'étendant entre ladite rondelle (34) et ledit autre volant (16) et formant une surface radiale d'appui de la partie cylindrique (46) de la rondelle (34) en cas de basculement d'un volant par rapport à l'autre.

## Patentansprüche

1. Zweimassendämpfungsschwungrad, insbesondere für ein Kraftfahrzeug, umfassend ein Primärschwungrad (10) und ein dazu koaxiales Sekundärschwungrad (16), ein Lager (18) zum Tragen und Zentrieren des Sekundärschwungrades auf dem Primärschwungrad, und einen Torsionsdämpfer (20), der zwischen den beiden Schwungrädern angeordnet ist und sie zur Übertragung eines Drehmoments rotatorisch miteinander verbindet, und der eine Reibscheibe (34) umfasst, die auf einem der Schwungräder oder auf einem fest mit einem der Schwungräder verbundenen Element aufliegt und die rotatorisch von dem anderen Schwungrad oder von einem fest mit dem anderen Schwungrad verbundenen Element angetrieben wird, **dadurch gekennzeichnet, dass** der radial äußere Umfang der besagten Scheibe (34) einen axial vorspringenden zylindrischen Teil (46) aufweist, der sich auf der Seite des Schwungrades erstreckt, welches die Scheibe rotatorisch antreibt, der eine radiale Fläche zur Auflage auf diesem Schwungrad hat und der ein axiales Widerlager bildet, das sich einem Kippen eines der Schwungräder relativ zu dem anderen widersetzt.

2. Zweimassendämpfungsschwungrad nach Anspruch 1, **dadurch gekennzeichnet, dass** der zylindrische Teil (46) der Scheibe (34) sich radial erstreckt in einem geringen axialen Abstand von dem Schwungrad (16) oder von dem Element (30), welches ihn rotatorisch antreibt, und auf diesem Schwungrad (16) oder auf diesem Element (30) aufliegt, wenn eines der Schwungräder gegen das andere kippt.

3. Zweimassendämpfungsschwungrad nach einem der Ansprüche 1 bis 2, **dadurch gekennzeichnet, dass** der zylindrische Teil (46) der Scheibe Mittel umfasst, die in Umfangsrichtung in Kontakt kommen mit komplementären Mitteln (50) des die Scheibe rotatorisch antreibenden Schwungrads.

4. Zweimassendämpfungsschwungrad nach Anspruch 3, **dadurch gekennzeichnet, dass** die besagten axial vorspringenden Elemente (50) mit einem umfangsmäßigen Spiel in die vorgenannten Einkerbungen (48) des zylindrischen Teils (46) der Scheibe (34) eingreifen.

5. Zweimassendämpfungsschwungrad nach einem der vorhergehenden Ansprüche, **dadurch gekennzeichnet, dass** die Scheibe aus Kunststoff besteht.

6. Zweimassendämpfungsschwungrad nach einem der vorhergehenden Ansprüche, **dadurch gekennzeichnet, dass** das Lager zum Tragen und Zentrieren ein Gleitlager oder ein Wälzlager mit relativ geringen Abmessungen ist.

7. Zweimassendämpfungsschwungrad nach einem der vorhergehenden Ansprüche, **dadurch gekennzeichnet, dass** der Torsionsdämpfer Federn (22) umfasst, die in Umfangsrichtung in einer am äußeren Umfang eines der Schwungräder ausgebildeten ringförmigen Kammer (24) angeordnet sind und die mit ihren Enden auf einem an dem anderen Schwungrad befestigten ringförmigen Flansch (30) aufliegen, wobei dieser ringförmige Flansch sich zwischen der besagten Scheibe (34) und dem besagten anderen Schwungrad (16) erstreckt und eine radiale Oberfläche zur Auflage des zylindrischen Teils (46) der Scheibe (34) im Fall des Kippens eines Schwungrads relativ zu dem anderen bildet.

## Claims

1. Double damping flywheel, in particular for a motor vehicle, comprising two, coaxial primary (10) and secondary (16) inertia flywheels, a bearing (18) for support and centring of the secondary flywheel on the primary flywheel, and a torsion damper (20) which is fitted between the two flywheels and connects them in rotation for transmission of torque, and comprising a friction washer (34) which is applied on one of the flywheels or on an element which is integral with one of the flywheels, and is rotated by the other one of the flywheels or by an element which is integral with the other one of the flywheels, **characterised in that** the radially outer periphery of the said washer (34) comprises a cylindrical part (46) which projects axially, extending from the side of the flywheel which rotates the washer, having a radial surface for application on this flywheel, and constituting an axial stop which opposes the tilting of one of the flywheels relative to the other.

2. Double damping flywheel according to claim 1, **characterised in that** the cylindrical part (46) of the washer (34) extends radially at a short axial distance from the flywheel (16) or from the element (30) which rotates it and is applied on this flywheel (16) or on this element (30) in the case of tilting of one of the flywheels towards the other flywheel.

3. Double damping flywheel according to one of claims 1 or 2, **characterised in that** the cylindrical part (46) of the washer comprises means which are circumferentially engaged with complementary means (50) of the flywheel for rotation of the washer.

4. Double damping flywheel according to claim 3, **characterised in that** the said axially projecting elements (50) are engaged with circumferential play in notches (48) of the cylindrical part (46) of the washer.

5. Double damping flywheel according to one of the preceding claims, **characterised in that** the washer is made of plastic material.

6. Double damping flywheel according to one of the preceding claims, **characterised in that** the bearing (18) for support and centring is a plain bearing or a roller bearing with relatively small dimensions.

7. Double damping flywheel according to one of the preceding claims, **characterised in that** the torsion damper comprises springs (22) which are arranged circumferentially in an annular chamber (24) formed on the outer periphery of one of the flywheels, and are applied at their ends on an annular flange (30) which is integral with the other flywheel, this annular flange extending between the said washer (34) and the said other flywheel (16), and forming a radial surface for support of the cylindrical part (46) of the washer (34) in the case of tilting of one flywheel relative to the other.
